# EUROPEAN PATENT APPLICATION

(11) **EP 2 251 592 A2**
(43) Date of publication of application: **17.11.2010**
(21) Application number: 10162805.5
(22) Date of filing: 14.05.2010
(51) Int. Cl.: F21V 19/00, F21S 8/10, F21W 101/02, F21Y 101/02

(54) **Vehicular lamp**

(30) Priority: 14.05.2009 JP 2009117304
(71) Applicant: Koito Manufacturing Co., Ltd., Tokyo (JP)
(72) Inventor: Tsukamoto, Hironori, Shizuoka-shi, Shizuoka (JP)
(74) Representative: Intès, Didier Gérard André

(57) **Abstract**

A vehicular lamp including a light source unit including a light-emitting element (14) inside a lamp housing (1); a planar wiring member (13) on which the light-emitting element (14) is mounted; and a support substrate (11) having a flat portion that supports the planar wiring member (13). The support substrate (11) is formed from a plate having high thermal conductivity, the planar wiring member (13) is fixed to the flat portion of the support substrate (11), and a portion of the support substrate (11) is fixedly supported inside the lamp housing (1).

## Description

### Field of the Invention

The present invention relates to a vehicular lamp having a light-emitting element as a light source. More specifically, the present invention relates to a vehicular lamp having a constitution in which the light-emitting element is mounted on a flexible circuit board and installed inside a lamp housing.

### Related Art

Lamps having a light-emitting element such as a light-emitting diode (LED) or the like as a light source have been proposed as vehicular lamps in recent years. In this type of lamp, when a plurality of LEDs is provided for obtaining a required light intensity in the lamp, a configuration may be used in which the plurality of LEDs is mounted on a flexible printed circuit board (FPC) and the FPC is installed inside a lamp housing as in Patent Document 1. A heat radiation structure is also required for releasing heat generated by the LEDs in order to improve the light-emitting characteristic of the LEDs. For example, as described in Patent Document 2, a structure in which an LED mounting substrate having an LED mounted thereon is adhesively fixed to a heat sink using an adhesive with excellent thermal conductivity has been proposed as such a heat radiation structure.

[Patent Document 1] Japanese Patent Application Laid-Open (Kokai) No. 2005-322450

[Patent Document 2] Japanese Patent Application Laid-Open (Kokai) No. 2007-158242

### SUMMARY OF INVENTION

A structure in which an FPC is mounted with a plurality of LEDs as in Patent Document 1 could use a structure in which the FPC is adhesively fixed to a heat sink using an adhesive with excellent thermal conductivity as in Patent Document 2 to increase the heat radiation performance of heat generated by the LEDs. However, if adhesive bubbles are created when adhering the FPC to the heat sink, these bubbles may lower thermal conductivity between the FPC and the heat sink, thus lowering the heat radiation performance of the light-emitting element. To ensure that such bubbles are not created, a structure has been proposed in the past that first adheres the FPC to the top surface of a flat sub-substrate, mounts the LED to the FPC adhered to the sub-substrate, and then connects and supports the back surface of the sub-substrate on the heat sink. In other words, the FPC already mounted with the LED is adhered to a sub-substrate, which enables the top surface of the FPC to be pressed by a roller or the like according to a "squeegee" method for adhesion. Thus, bubbles formed in the adhesive are pushed out from between the FPC and the sub-substrate to improve thermal conductivity between the FPC and the sub-substrate, which can also improve thermal conductivity between the FPC and the heat sink.

In this proposed heat radiation structure, a sub-substrate is needed in addition to the FPC and the heat sink for releasing heat, which increases the number of components forming the lamp and may lead to increases in the cost and size of the lamp. Furthermore, additional work is required during assembly of the lamp to incorporate the heat sink inside the lamp housing after connecting the sub-substrate to the heat sink, which raises the problem of a more complicated operation.

One or more embodiments of the present invention provide a vehicular lamp that secures the heat radiation performance required of a light-emitting element while reducing the number of components and assembly operation man-hours.

One or more embodiments of the present invention relate to a vehicular lamp having a light source unit that includes at least one light-emitting element inside a lamp housing. The vehicular lamp is **characterized in that** the light source unit comprises a planar wiring member mounted with the light-emitting element; and a support substrate having a flat portion that supports the planar wiring member, wherein the support substrate is formed from a plate having high thermal conductivity, with the planar wiring member fixed to a top surface of the flat portion and a portion of the support substrate fixedly supported inside the lamp housing.

The support substrate is formed from a plurality of independent support substrates. The planar wiring member is formed from a film-like planar wiring member having flexibility and fixed to each of the plurality of support substrates. The plurality of substrates are fixedly supported inside the lamp housing in any orientation by the flexibility of the planar wiring member.

Here, as the structure fixing the planar wiring member to the support substrate, a structure is preferred in which the planar wiring member is closely adhered to the support substrate. In addition, the light-emitting element mounted on the planar wiring member may be a plurality of light-emitting elements mounted on one support substrate.

A reflector that collects light radiated from the light-emitting element may be further provided, wherein the reflector is fixed to the support substrate.

The support substrate is preferably fixedly supported in the lamp housing such that a portion of the support substrate is in contact with a portion of the lamp portion, or a portion of a member installed inside the lamp housing.

According to one or more embodiments of the present invention, a light source unit is formed from a planar wiring member mounted with a light-emitting element, and a support substrate to which the planar wiring member is fixed. Therefore, the number of components and assembly operation man-hours can be reduced. The support substrate is provided with a flat portion in particular. If adhesion is employed for fixing the planar wiring member to the flat portion, such adhesion can be achieved using a "squeegee" method to ensure close contact between the planar wiring member and the support substrate and improve the thermal conductivity of both. Thus, heat generated by the light-emitting element is efficiently transmitted from the planar wiring member to the support substrate adhered thereto. As a consequence, heat can be released from the support substrate and the heat radiation performance required of the light source unit secured.

Forming the support substrate as a plurality of independent support substrates in one or more embodiments of the present invention enables the substrates to be fixed inside a lamp housing in any orientation by the flexibility of the planar wiring member. This simplifies the configuration of the light source unit because the light-emitting element may arranged in any manner. Furthermore, by mounting a plurality of light-emitting elements on one support substrate, the number of support substrates used can be minimized, thereby suppressing increased complexity of the structure. A reflector may also be provided to obtain a desired light distribution characteristic and additional heat radiation can be expected from the reflector as well. By contacting a portion of the support substrate with a portion of the lamp portion or a portion of a member installed inside the lamp housing, heat transmitted to the support substrate can be efficiently transmitted to the lamp housing to increase the heat radiation performance.

Other aspects and advantages of the invention will be apparent from the following description, the drawings and the claims.

### BRIEF DESCRIPTION OF DRAWINGS

FIG. 1 is a schematic frontal view of a left headlamp according to a first embodiment.

FIG. 2 is an enlarged cross-sectional view taken along a line II-II in FIG. 1.

FIG. 3 is a schematic perspective view of a daytime running lamp (DRL) unit according to the first embodiment.

FIG. 4 is a view that shows the planar shape of an FPC according to the first embodiment.

FIG. 5 is a schematic perspective view of the DRL unit according to a second embodiment.

FIG. 6 is a cross-sectional view similar to FIG. 2 of the DRL unit according to a third embodiment.

FIG. 7 is a schematic perspective view of the DRL unit according to the third embodiment.

### DETAILED DESCRIPTION

(First Embodiment)

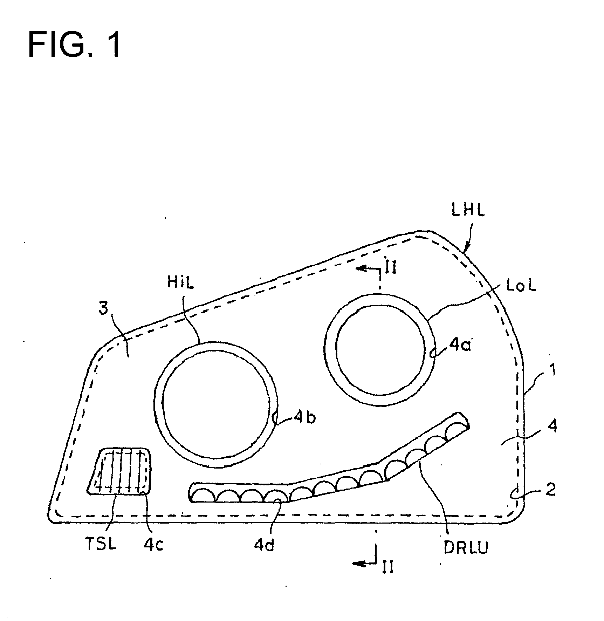

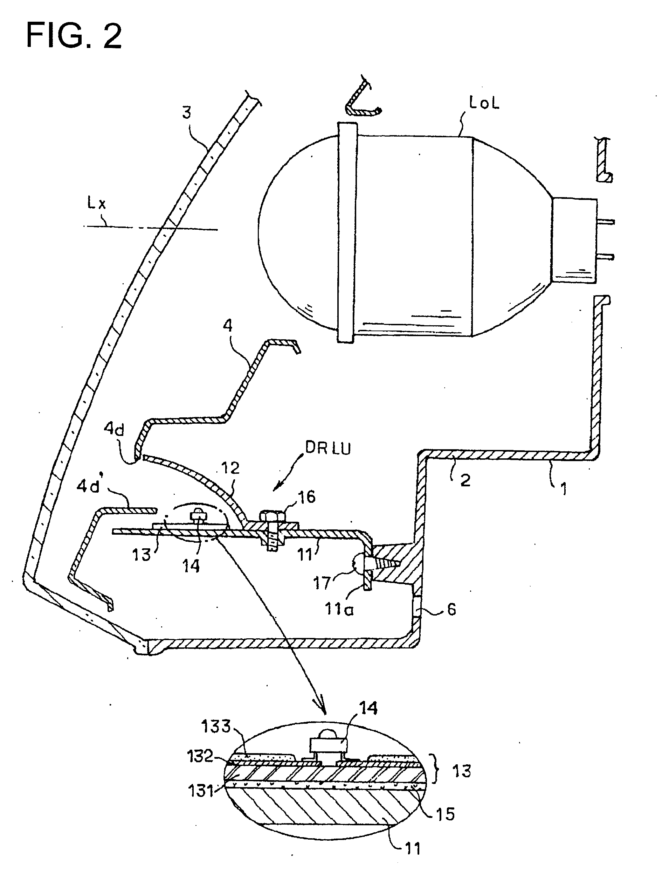

Hereinafter, embodiments of the present invention will be described with reference to the accompanying drawings. FIG. 1 is a schematic frontal view of an embodiment of the present invention applied to a left headlamp LHL among headlamps provided on the right and left sides of a front body portion of an automobile. FIG. 2 is an enlarged cross-sectional view taken along a line II-II in FIG. 1. A lamp housing 1 is formed from a container-like lamp body 2 and a transparent front cover 3. A low-beam lamp LoL, a high-beam lamp HiL, and a turning signal lamp TSL are provided aligned inside the lamp housing 1, with the low-beam lamp LoL on the right side and the high-beam lamp HiL and the turning signal lamp TSL on the left side as viewed from the front. The low-beam lamp LoL and the high-beam lamp HiL may be formed from any type of lamp. In this embodiment, for example, the low-beam lamp LoL and the high-beam lamp HiL are formed from projector type lamps that use a discharge bulb or an LED as a light source. The turning signal lamp TSL may also be formed from a common lamp that uses an incandescent bulb or an LED as a light source. These lamps are provided inside opening windows 4a, 4b, 4c that are respectively provided in a pseudo-reflector, a so-called extension 4, which is provided inside the lamp housing 1. The extension 4 is a resin molded component having an aluminized top surface, and appears to be a mirror surface when the headlamp LHL is viewed from the front.

A daytime running lamp (DRL) unit DRLU is provided oriented in the horizontal direction in a region below the low-beam lamp LoL and the high-beam lamp HiL inside the lamp housing 1. As shown in FIG. 2, a horizontally long opening window 4d that is inclined diagonally upward in the rightward direction from a leftward position as viewed from the front, i.e., inclined diagonally upward toward the outer side direction of the automobile from a horizontal plane, is opened in the extension 4. The DRL unit DRLU is provided at the rear of the extension 4 and borders the opening window 4d. The DRL unit DRLU is formed from a flat base substrate 11 having high thermal conductivity; a reflector 12 that is connected to the top surface of the base substrate 11 by a screw 16; and a flexible printed circuit board (FPC) 13 having an LED 14 mounted thereon as a light source, which is adhered to the top surface of the base substrate 11.

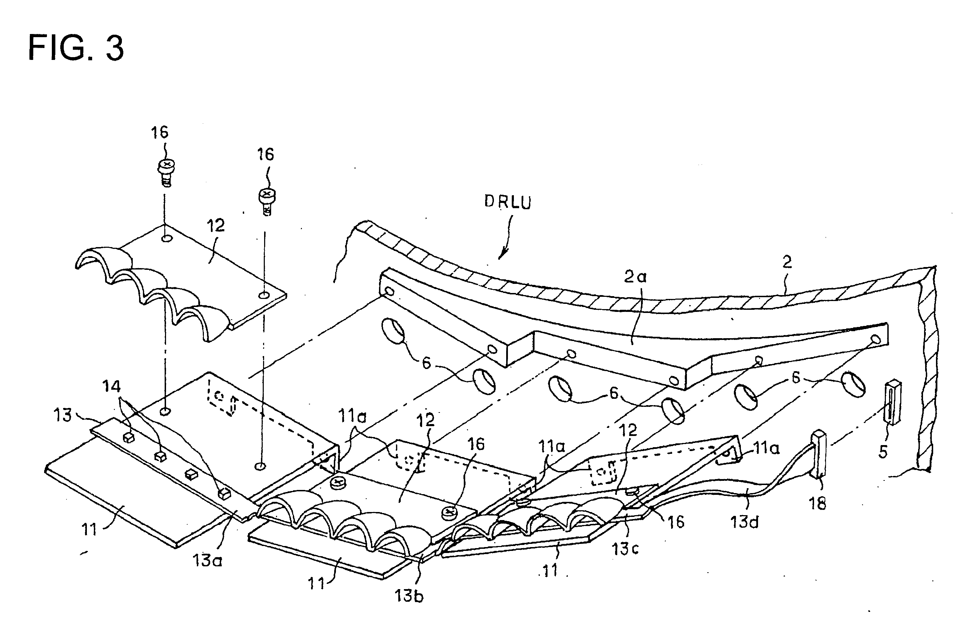

FIG. 3 is a schematic perspective view of the DRL unit DRLU. The base substrate 11 is formed as a support substrate. The base substrate 11 is structured using three flat plates, in this case, aluminum plates, each having independently high thermal conductivity. Namely, in the first embodiment, the entire top surface of the base substrate 11 is formed as a flat part. Each base substrate 11 includes a support tab 11a that is formed bending vertically downward at two locations, namely, on the right and left, of a side that faces the rear portion of the lamp when installed inside the lamp housing 1. The support tab 11a is fixedly held by a wood screw 17 (see FIG. 2) on a rib 2a that is integrally provided on a rear inner surface of the lamp body 2. The rib 2a may have any shape; in this embodiment, the rib 2a is formed projecting from the rear inner surface of the lamp body 2 toward the front surface side so as to enable fixing of the three base substrates 11, and has a stepped configuration that extends in the horizontal direction and gradually recedes rearward toward the right side in the drawing.

Here, the reflector 12 is formed as a series of four integrated reflectors, wherein four reflectors each having a half-dome shape formed from a rotational paraboloid are aligned in a row in the horizontal direction. Three four-series reflectors 12 are respectively provided on the base substrates 11. Each of the three four-series reflectors 12 is connected and integrated with one of the three base substrates 11 by the screw 16. The four-series reflector 12 is a resin molded component having an aluminized top surface, and at least the inner surface of the reflector 12 is formed as a light reflective surface.

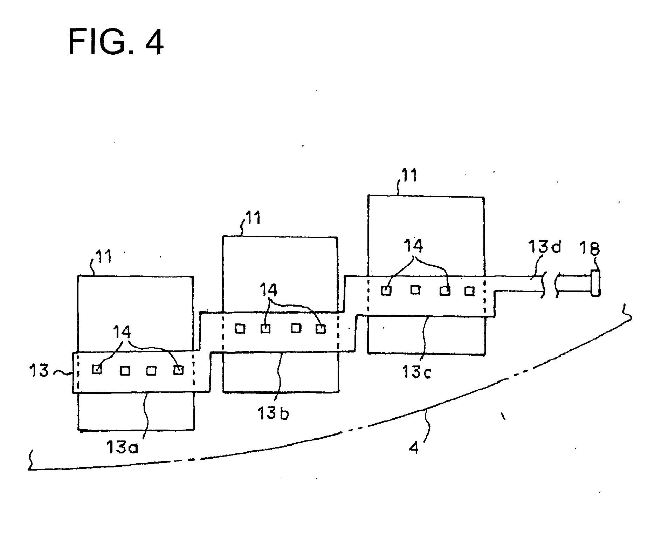

The FPC 13 is formed as a planar wiring member of the present invention. As illustrated by enlarging part of the cross-sectional structure in FIG. 2, on the top surface of a flexible, horizontally long, insulative resin film 131, a conductive layer 132 that includes copper foil and the like is formed in a predetermined pattern. An insulative coating film 133 covers the top surface of the conductive layer 132. As illustrated by the planar shape in FIG. 4, the FPC 13 has a planar shape with a three-stepped configuration in which stepped portions 13a, 13b, 13c are staggered into three consecutive steps in the width direction and extend along the planar shape of the extension 4 shown by a chain line. In addition, the top surface of the conductive film 132 is exposed at four locations in the length direction on each of the stepped portions 13a, 13b, 13c, and these exposed portions are each mounted with an LED 14. The plurality of the LEDs 14 is arranged at a focal point of each reflector of the four-series reflector 12.

A connector 18 is connected to a lengthwise end portion 13d of the FPC 13. The connector 18 is fitted and electrically connected to a relay connector 5 provided in the lamp body 2. An external connector not shown in the drawings can be fitted and electrically connected to the relay connector 5 from the outer side of the lamp body 2. External power (not shown in the drawings) is supplied from the relay connector 5 to the conductive layer 132 through the connector 18, and such power is then supplied from the conductive layer 132 to each LED 14. The FPC 13 extends in the length direction over the top surfaces of the three base substrates 11. The back surfaces of the stepped portions 13a, 13b, 13c are each adhesively fixed by an adhesive having high thermal conductivity to the flat top surfaces of the three base substrates 11.

A production method of the DRL unit DRLU having the above configuration will be described. First, the three base substrates 11 are adhered to the back surface of the FPC 13 having a three-stepped configuration. Here, the three base substrates 11 are spaced at a predetermined interval in the length direction and aligned in a stepped configuration in the width direction such that the base substrates 11 are sequentially staggered by a predetermined dimension.

After coating an adhesive 15 (see FIG. 2) having high thermal conductivity on the flat portions of the top surface of each base substrate 11, the FPC 13 is placed on the aligned base substrates 11. The upper surface of the FPC 13 is then squeegeed by a squeegee device (not shown in the drawings), and the stepped portions 13a, 13b, 13c of the FPC 13 are pressed onto the top surfaces of the base substrates 11, whereby bubbles present in the adhesive 15 are pushed out of the adhesive. In the case of a thermosetting adhesive, a heat treatment or the like is carried out to harden the adhesive so that the FPC 13 adheres and integrates with the three base substrates 11. Thus, the three base substrates 11 are integrated through the FPC 13.

The integrated FPC 13 and base substrates 11 are then set on an LED automatic installer (not shown in the drawings). Electrodes of the LEDs 14 are respectively connected and automatically mounted by a conductive brazing filler metal such as a solder to predetermined locations of the FPC 13, namely, locations on the stepped portions 13a, 13b, 13c where the conductive layer 132 is exposed. Next, the four-series reflectors 12 are respectively fixed on each base substrate 11 by the screws 16 to form the DRL unit DRLU.

The DRL unit DRLU is then assembled to inside the lamp housing 1. The low-beam lamp LoL, the high-beam lamp HiL, and the turn signal lamp TSL have already been assembled to the lamp housing 1. The support tabs 11a of the three base substrates 11 of the DRL unit DRLU are subsequently fixed by the wood screws 17 (see FIG. 2) to the rear inner surface of the lamp body 2. Next, the connector 18 of the end portion 13d of the FPC 13 is fitted to the relay connector 5 provided in the lamp body 2. Thereafter, the extension 4 is mounted inside the lamp housing 1. Thus, the four-series reflector 12 is positioned corresponding to the opening window 4d of the extension 4 and the LEDs 14 are arranged visible through the opening window 4d with the DRL unit DRLU already assembled inside the lamp housing 1. At such time, a lower edge portion 4d' of the opening window 4d of the extension 4 extends rearward by a predetermined dimension to partially cover the FPC 13, so as to reveal the FPC 13 as little as possible through the front cover 3 when viewed from the front of the headlamp LHL.

In the DRL unit DRLU, power is supplied from an external power source to the LEDs 14 through the conductive layer 132 of the FPC 13. Light emitted and radiated from the LEDs 14 is reflected and collected by the reflectors of the four-series reflector 12. Such light then passes through the opening window 4d of the extension 4 and through the front cover 3 so as to be irradiated forward of the automobile along a lamp optical axis Lx.

The light emission of the LED 14 generates heat. Some of the heat is transmitted from the LED 14 to the insulative resin film 131 through the conductive layer 132 of the FPC 13, and the rest of the heat is transmitted from the bottom surface of the LED 14 to the insulative resin film 131 by radiation. Because heat transmitted to the insulative resin film 131 is further transmitted to the base substrate 11 through the adhesive 15 having high thermal conductivity and the base substrate 11 is a board having high thermal conductivity, such heat is released from between the back surface and front surface of the base substrate 11. Alternatively, such heat is transmitted from the support tab 11a of the base substrate 11 to the lamp body 2 in close contact therewith. The lamp body 2 has a large surface area and thus releases heat according to its heat capacity.

Most of the bubbles in the adhesive 15 adhering the FPC 13 to the base substrate 11 have been eliminated by squeegeeing during adhesion. The conduction efficiency of heat from the FPC 13 to the base substrate 11 is therefore extremely high and enables marked improvement of a heat radiation effect. Other heat is transmitted from the base substrate 11 to the extension 4 by radiation and released therefrom. In addition, other heat is transmitted from the LED 14 or from the base substrate 11 to the four-series reflector 12 and released from the outer surface of the four-series reflector 12.

In the DRL unit DRLU as described above, the base substrate 11 is formed as a support substrate of the FPC 13 and as a heat radiation plate. Therefore, an independent heat sink such as that described in Patent Document 1 is no longer necessary, and a simple DRL unit configuration can be achieved that suppresses an increase in the number of components. An operation to integrate the FPC 13 into the base substrate 11 may be similar to the operation to integrate an FPC into the sub-substrate of Patent Document 1. Subsequent incorporation of the base substrate 11 inside the lamp housing 1 completes incorporation of the DRL unit DRLU. Thus, the assembly operation is simplified. The three base substrates 11 according to the first embodiment are connected through the FPC 13. However, the flexibility of the FPC 13 enables the base substrates 11 to be fixed at any angle inside the lamp housing 1, that is, with a high degree of freedom in terms of orientation, whereby a desired state of installation can be achieved.

Here, the base substrate 11 is formed using a substrate with as large a heat capacity as possible, that is, as thick a substrate as possible, or using a substrate with as large a surface area as possible, under the weight parameter required of the DRL unit DRLU, so as to increase the heat radiation effect. The support tab 11a of the base substrate 11 can also be formed to as large a dimension as allowed in order to increase the amount of surface contact with the lamp body 2, and thus further increase the heat radiation effect. As shown in FIG. 2, in the first embodiment, a portion of the lamp housing 1 (namely, in this case, a small hole 6 that runs through a rear wall of the lamp body 2 to communicate the inside of the lamp body 2 to the outside) is opened. Therefore, outside cool air can be guided inside to the base substrate 11 from the small hole 6 to even further increase the heat radiation effect.

Although not shown in the drawings, a modification of the first embodiment may be formed such that the three base substrates respectively adhere to independent FPCs. That is, three FPCs may be prepared and each adhered with one base substrate. Obviously, during adhesion, most of the bubbles in the adhesive can be completely eliminated by squeegeeing because the FPC is adhered to a flat surface of the base substrate. In addition, the three FPCs may each be connected to a connector, and the connectors fitted to one another such that the three FPCs are connected in parallel and electrically connected together. Accordingly, after the three base substrates are all fixed inside the lamp housing, the connectors of the FPCs may be fitted to one another so as to achieve electrically connected FPCs that are equivalent to the serially-formed FPC of the first embodiment.

A terminally connected FPC connector may be fitted to a relay connector provided in the lamp housing to enable an external power supply. With this configuration, there is no need to form the FPC in a stepped configuration as in the first embodiment, and a flat FPC with a simple rectangular shape may be used, which considerably simplifies production. If the rear inner surface of the lamp housing has a complex three-dimensional curved configuration, the base substrate may be fixed in any orientation regardless of any restriction imposed by the limits of the FPC flexibility. Furthermore, the plurality of base substrates and FPCs may have the same configuration. Therefore, in addition to extremely simple production, any number of base substrates and FPCs may be combined to easily form DRL units with different numbers of light-emitting elements.

(Second Embodiment)

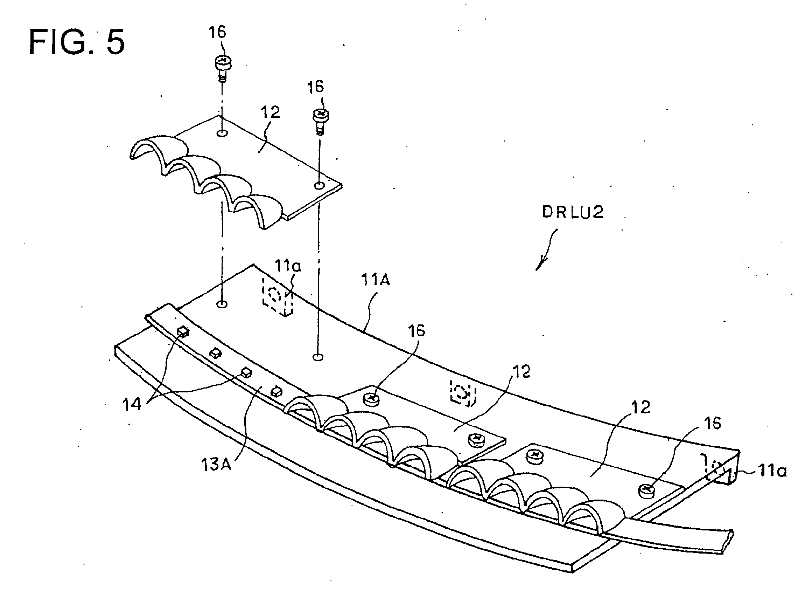

FIG. 5 is a schematic perspective view of a DRL unit DRLU2 according to a second embodiment. Here, a base substrate 11A is formed with a planar shape having a narrow arc that curves along the curve of the front edge of the extension 4 or the lamp housing 1. The base substrate 11A is fixed to the rear inner surface of the lamp body 2 (similar to the embodiment shown in FIG. 2) by a reverse L-shaped support tab 11a that is provided at a plurality of locations in the length direction of the base substrate 11A. An FPC 13A is formed with a similar narrow arc corresponding to the base substrate 11A, and a plurality of LEDs 14 is mounted in the length direction of the FPC 13A. One base substrate 11A is used in the second embodiment, and this FPC 13A is adhered and fixed to a flat portion that accounts for almost the entire top surface of the base substrate 11A, with the plurality of LEDs 14 mounted on the FPC 13A. Specifically, four LEDs 14 are mounted so as to be similarly positioned in the optical axis direction of the lamp.

Therefore, the reflector in this embodiment is formed as the four-series reflector 12 similar to that in the first embodiment. If the LEDs 14 are mounted staggered in the lamp optical axis direction, the reflectors forming the four-series reflector 12 may be formed as reflectors having a stepped configuration that is staggered in the optical axis direction along the curvature of the FPC 13A. In such a case, irradiation from the LED 14 can be achieved along the slant of the lamp, thus creating continuity among the LEDs 14 and also increasing the degree of design freedom.

In the second embodiment, heat generated by the LED 14 is transmitted from the FPC 13A to the base substrate 11A, and released from the base substrate 11A. The mode of heat release is substantially identical to that of the first embodiment. In the second embodiment, the base substrate 11A is formed using one plate having a large surface area. Therefore, the base substrate 11A has a large heat capacity that is capable of increasing the heat radiation effect. Because one base substrate 11A is used in the second embodiment, the number of components is even further reduced compared to the first embodiment, and a simple DRL unit configuration can be achieved. In addition, incorporation of one base substrate 11A inside the lamp housing completes incorporation of the DRL unit DRLU2. Therefore, the assembly operation can be further simplified.

(Third Embodiment)

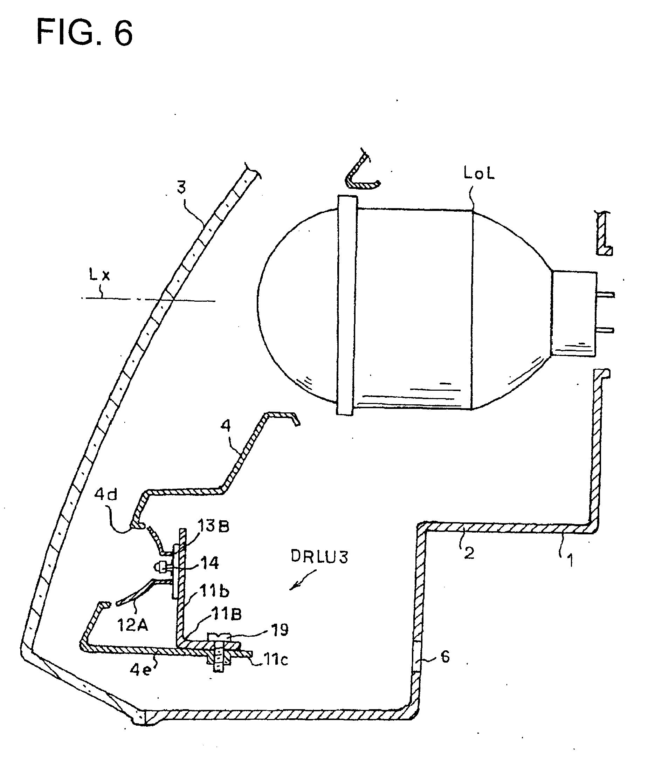

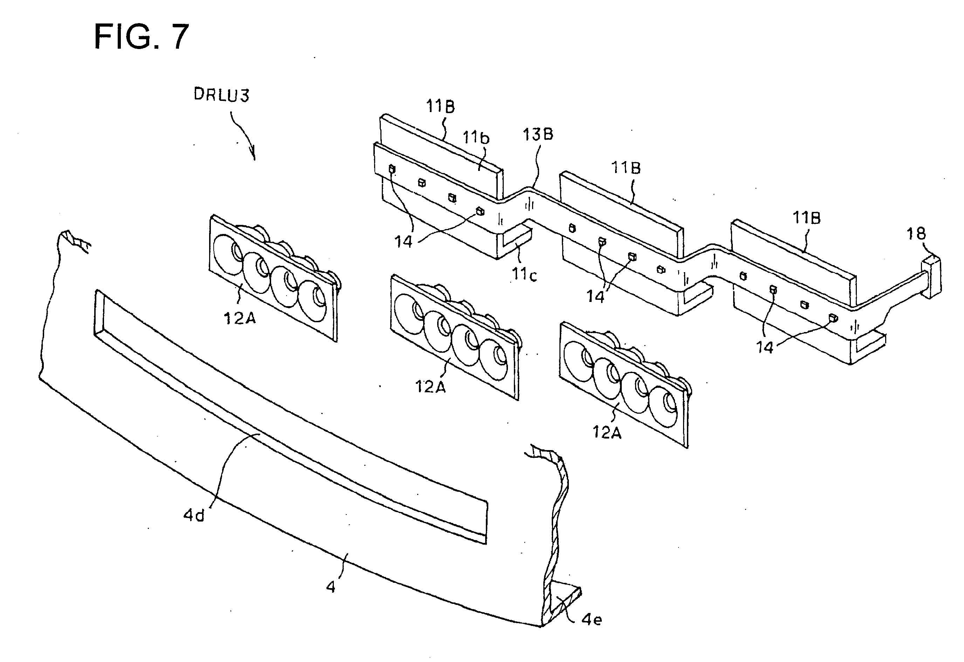

FIG. 6 is a cross-sectional view similar to FIG. 2 of a DRL unit DRLU3 according to a third embodiment. FIG. 7 is a schematic perspective view. Three base substrates 11B are each formed into an L-shape with the front edge portions formed bending vertically upward. A front edge portion 11b of each base substrate 11B is formed as a flat portion that is flat in the vertical direction, and the front edge portion 11b is provided inside the lamp housing 1 so as to be positioned behind the opening window 4d of the extension 4. In addition, a horizontally oriented rear edge portion 11c is fixed by a screw 19 (see FIG. 6) on a lower edge portion 4e that is bent toward the rear of the extension 4, and thereby integrated with the extension 4.

An FPC 13B, similar to the first embodiment, extends over three base substrates 11B. A front edge portion 11b of the base substrate 11B is vertically oriented. Using an adhesive, the FPC 13B is adhered to and integrated with the front edge portions 11b. The adhesive structure is substantially identical to that of the first embodiment. A plurality of LEDs 14 are mounted on the vertically oriented top surface of the FPC 13B, and an optical axis of light emission for each LED 14 is oriented perpendicular to the top surface of the FPC 13B; that is, the optical axis of light emission faces in the same direction as the lamp optical axis Lx.

A four-series reflector 12A is respectively attached to the top surfaces of the base substrates 11B at a position forward of the FPC 13B. The four-series reflector 12A is formed by connecting four reflectors that each have a reflective surface with a rotational parabolic shape, and the four-series reflector 12A is a resin molded component having an aluminized top surface. The four-series reflector 12A is disposed such that an LED 14 is positioned at the focal point of each reflector and then fixed to the base substrate 11B, in this case by adhesion, or by a suitable fixing structure that is not shown in the drawings.

In the third embodiment, the FPC 13B is fixed and adhered to a flat front edge portion 11b of the three base substrates 11B, and the LED 14 is mounted thereon to achieve a structure similar to that of the first embodiment. When the LED 14 emits light, light radiated from the LED 14 is directly radiated or reflected by the reflector 12A forward. Such light then passes through the front cover 3 and is irradiated forward.

Heat generated by the LED 14 is transmitted to the base substrate 11B through the FPC 13B and released from the back surface of the base substrate 11B. At the same time, such heat is also transmitted to the lower edge portion 4e of the extension 4 fixed to the rear edge portion 11c, and is released through the extension 4. In addition, heat is transmitted from the extension 4 to the lamp body 2 and released therefrom. Because the FPC 13B is adhered to a flat surface of the base substrate 11B in such case, bubbles in the adhesive are almost completely eliminated by squeegeeing during adhesion, which obviously can further increase the conduction efficiency of heat for a marked improvement in heat radiation performance.

In the third embodiment, the DRL unit DRLU3 is formed from the FPC 13B and the base substrate 11B, thus suppressing an increase in the number of components and achieving a simple DRL unit configuration. The operation to integrate the FPC 13B with the base substrate 11B and the operation to incorporate the DRL unit DRLU3 inside the lamp housing 1 are both easy and can simplify the assembly operation. Furthermore, the DRL unit DRLU3 can be integrated with the extension 4. Therefore, incorporating the extension 4 inside the lamp housing 1 automatically incorporates the DRL unit DRLU3 into the lamp housing 1, thus reducing work man-hours.

Examples of the present invention applied to a DRL unit were illustrated in the above embodiments. However, the present invention may be applied to other lamp units that use an LED as a light source and are incorporated inside a headlamp, such as lamp units used as a light source for a clearance lamp or a turn signal lamp. In addition, the present invention is not limited to a headlamp and may also be applied to a lamp unit that forms a rear lamp.

Furthermore, the light-emitting element employed by embodiments of the present invention is not limited to an LED. The present invention is similarly applicable to any vehicular lamp that uses as a light source any light-emitting element that has a heat characteristic, such as a laser diode or the like, and requires a heat radiation measure.

Embodiments of the present invention may be employed in a vehicular lamp having a structure in which a light-emitting element such as an LED is mounted on an FPC.

While description has been made in connection with exemplary embodiments of the present invention, it will be obvious to those skilled in the art that various changes and modification may be made therein without departing from the present invention. It is aimed, therefore, to cover in the appended claims all such changes and modifications falling within the true spirit and scope of the present invention.

[Description of the Reference Numerals]

1 LAMP HOUSING

2 LAMP BODY

3 FRONT COVER

4 EXTENSION

5 RELAY CONNECTOR

11, 11A, 11B BASE SUBSTRATE (SUPPORT SUBSTRATE)

12, 12A REFLECTOR (FOUR-SERIES REFLECTOR)

13, 13A, 13B FPC (PLANAR WIRING MEMBER)

14 LED (LIGHT-EMITTING ELEMENT)

15 ADHESIVE

16 SCREW

17 WOOD SCREW

18 CONNECTOR

DRLU, DRLU2, DRLU3 DRL UNIT

LHL LEFT HEADLAMP

131 INSULATIVE RESIN FILM

132 CONDUCTIVE LAYER

133 INSULATIVE COATING LAYER

## Claims

1. A vehicular lamp comprising:
a light source unit comprising:
a light-emitting element (14) inside a lamp housing (1), **characterized in that** it further comprises
a planar wiring member (13) on which the light-emitting element (14) is mounted;
and
a support substrate (11) having a flat portion that supports the planar wiring member (13),
wherein the support substrate (11) is formed from a plate having high thermal conductivity,
wherein the planar wiring member (13) is fixed to the flat portion of the support substrate (11), and
wherein a portion of the support substrate (11) is fixedly supported inside the lamp housing (1).

2. The vehicular lamp according to claim 1,
wherein the support substrate (11) is formed from a plurality of independent support substrates (11),
wherein the planar wiring member (13) is flexible and fixed to each of the plurality of independent support substrates (11), and
wherein the plurality of independent support substrates (11) are fixedly supported inside the lamp housing (1) in respective orientations.

3. The vehicular lamp according to claim 1 or 2,
wherein the planar wiring member (13) is adhered to the support substrate (11).

4. The vehicular lamp according to claim 2 or 2 and 3,
wherein a plurality of light-emitting elements (14) are mounted on a portion of the planar wiring member (13) supported by at least one of the plurality of independent support substrates (11).

5. The vehicular lamp according to any one of claims 1 to 4 further comprising:
a reflector (12) that collects light radiated from the light-emitting element (14),
wherein the reflector (12) is fixed to the support substrate (11).

6. The vehicular lamp according to any one of claims 1 to 5, wherein the flat portion of the support substrate (11) is oriented horizontally.

7. The vehicular lamp according to claim 6 further comprising:
a reflector (12) that collects light radiated from the light-emitting element (14),
wherein the reflector (12) is fixed to the flat portion of the support substrate (11),
and
wherein the reflector (12) has a half-dome shape formed from a rotational paraboloid.

8. The vehicular lamp according to claim 6 or 7, wherein the support substrate (11) comprises a vertically-oriented support tab (11a), and wherein the support substrate (11) is fixed a lamp body (2) through the vertically-oriented support tab (11a).

9. The vehicular lamp according to any one of claims 1 to 5, wherein the flat portion of the support substrate (11B) is oriented vertically.

10. The vehicular lamp according to claim 9 further comprising:
a reflector (12A) that collects light radiated from the light-emitting element (14),
wherein the reflector (12A) is fixed to the flat portion of the support substrate (11B), and
wherein the reflector (12A) is formed with a rotational parabolic shape.

11. The vehicular lamp according to claim 5, 7 or 10, wherein the reflector (12, 12A) is a resin-molded component having an aluminized surface.

12. The vehicular lamp according to claim 9 or 10, wherein the support substrate (11B) comprises a horizontally-oriented rear edge portion (11C), and wherein the support substrate (11B) is fixed to a lamp body (2) through the horizontally-oriented rear edge portion (11C).
